# EUROPEAN PATENT APPLICATION

(11) **EP 3 301 861 A1**
(43) Date of publication of application: **04.04.2018**
(21) Application number: 17193304.7
(22) Date of filing: 26.09.2017
(51) Int. Cl.: H04L 12/46, H04L 12/721

(54) **EVPN DESIGNATED FORWARDER STATE PROPAGATION TO CUSTOMER EDGE DEVICES USING CONNECTIVITY FAULT MANAGEMENT**

(30) Priority: 29.09.2016 US 201615281034
(71) Applicant: Juniper Networks, Inc., Sunnyvale, CA 94089 (US)
(72) Inventor: SINGH, Nitin, Fremont, CA 94539 (US); DORAI, Rukesh, Sunnyvale, CA 94086 (US); ARORA, Kapil, 560066 Bangalore (IN)
(74) Representative: D Young & Co LLP

(57) **Abstract**

Techniques are described to provide designated forwarder state propagation to customer edge network devices using connectivity fault management (CFM) so as to ensure that customer edge (CE) network devices are aware of a change in designated forwarder election in an Ethernet Virtual Private Network (EVPN). In one example, a method includes determining a change in designated forwarder election from a provider edge (PE) network device to another PE device; in response to the change in designated forwarder election, configuring a message including at least a client-facing interface status of the first PE device, wherein the client-facing interface status included in the message is configured as an indicator of a result of the change in designator forwarder election; and transmitting the message to the multi-homed CE device.

## Description

### TECHNICAL FIELD

The present disclosure relates to computer networks and, more particularly, detecting designated forwarder states within computer networks.

### BACKGROUND

A computer network is a collection of interconnected computing devices that can exchange data and share resources. Example network devices include switches or other layer two devices that operate within the second layer ("L2") of the Open Systems Interconnection ("OSI") reference model, i.e., the data link layer, and routers or other layer three ("L3") devices that operate within the third layer of the OSI reference model, i.e., the network layer. Network devices within computer networks often include a control unit that provides control plane functionality for the network device and forwarding components for routing or switching data units.

An Ethernet Virtual Private Network ("EVPN") may be used to extend two or more remote L2 customer networks through an intermediate L3 network (usually referred to as a "provider network"), in a transparent manner, i.e., as if the intermediate L3 network does not exist. In particular, the EVPN transports L2 communications, such as Ethernet packets or "frames," between customer networks via traffic engineered label switched paths ("LSP") through the intermediate network in accordance with one or more multiprotocol label switching (MPLS) protocols. In a typical configuration, provider edge ("PE") devices (e.g., routers and/or switches) coupled to the customer edge ("CE") network devices of the customer networks define label switched paths within the provider network to carry encapsulated L2 communications as if these customer networks were directly attached to the same local area network ("LAN"). In some configurations, the PE devices may also be connected by an IP infrastructure in which case IP/GRE tunneling or other IP tunneling can be used between the network devices.

In an EVPN, L2 address learning (also referred to as "MAC learning") on a core-facing interface of a PE device occurs in the control plane rather than in the data plane (as happens with traditional bridging) using a routing protocol. For example, in EVPNs, a PE device typically uses the Border Gateway Protocol ("BGP") (i.e., an L3 routing protocol) to advertise to other PE devices the MAC addresses the PE device has learned from the local consumer edge network devices to which the PE device is connected. As one example, a PE device may use a BGP route advertisement message to announce reachability information for the EVPN, where the BGP route advertisement specifies one or more MAC addresses learned by the PE device instead of L3 routing information. Additional example information with respect to EVPN is described in "BGP MPLS-Based Ethernet VPN," Request for Comments (RFC) 7432, Internet Engineering Task Force (IETF), February, 2015.

### SUMMARY

In general, techniques are described that facilitate designated forwarder state propagation to customer edge network devices using connectivity fault management ("CFM"). Connectivity fault management includes a number of proactive and diagnostic fault localization procedures such as proactively transmitting connectivity check ("CC") messages at a predetermined rate to other switches within a maintenance association. CFM allows an administrator to define a maintenance association as a logical grouping of devices within a L2 network that are configured to monitor and verify the integrity of a single service instance.

In one example, a method includes determining, by a first provider edge (PE) device that implements an Ethernet Virtual Private Network (EVPN), a change in designated forwarder election associated with the first PE device and a second PE device, wherein the first PE device and the second PE device are coupled to a multi-homed customer edge (CE) device by an Ethernet segment. The method also includes, in response to the change in designated forwarder election, configuring, by the first PE device, a message including at least a client-facing interface status of the first PE device, wherein the client-facing interface status included in the message is configured as an indicator of a result of the change in designator forwarder election. The method also includes transmitting, by the first PE device, the message to the multi-homed CE device.

In another example, a method includes receiving, by a CE device multi-homed to a plurality of PE devices that implement an EVPN, a message including a client-facing interface status of at least one of the plurality of PE devices, wherein the client-facing interface status included in the message is configured as an indicator of a result of a change in designator forwarder election associated with the plurality of PE devices. The method also includes determining, by the CE device, the client-facing interface status of at least one of the plurality of PE devices from the message without learning, by traditional media access control (MAC) address learning techniques, an updated source MAC address behind a remote CE device.

In another example, a PE device includes one or more processors operably coupled to a memory. The PE device also includes a routing engine having at least one processor coupled to a memory, wherein the routing engine executes software configured to: establish an EVPN with one or more other PE devices; determine a change in designated forwarder election from the PE device to another PE device, wherein the PE device and the another PE device are coupled to a multi-homed customer edge (CE) device by an Ethernet segment; in response to the change in designated forwarder election, configure a message including at least a client-facing interface status of the PE device, wherein the client-facing interface status included in the message is configured as an indicator of a result of the change in designator forwarder election; and transmit the message to the multi-homed CE device.

In another example, a system includes a multi-homed customer edge (CE) device of a layer 2 network, the CE device configured to implement a Continuity Check Protocol (CCP). The system also includes a first provider edge (PE) device of an intermediate layer 3 (L3) network, the first PE device configured to implement an Ethernet Virtual Private Network (EVPN) that is configured on the first PE device to provide layer 2 (L2) bridge connectivity to a customer network coupled to the CE device and to implement the CCP. The system also includes a second PE device of the intermediate L3 network, the second PE device configured to implement the EVPN that is configured on the second PE device to provide L2 bridge connectivity to the customer network coupled to the CE device and to implement the CCP, wherein the first PE device and the second PE device are coupled to the multi-homed CE device, wherein the first PE device is initially elected as a designated forwarder and the second PE device is initially elected as a non-designated forwarder, and wherein the first PE device is configured to transmit a Connectivity Fault Maintenance (CFM) message to the CE device in response to a change in designated forwarder election associated with the first PE device and the second PE device, wherein the CFM message includes a client-facing interface status of the first PE device as an indicator of a result of the change in designated forwarder election.

The details of one or more aspects of the techniques are set forth in the accompanying drawings and the description below. Other features, objects, and advantages of the techniques of this disclosure will be apparent from the description and drawings, and from the claims.

### BRIEF DESCRIPTION OF DRAWINGS

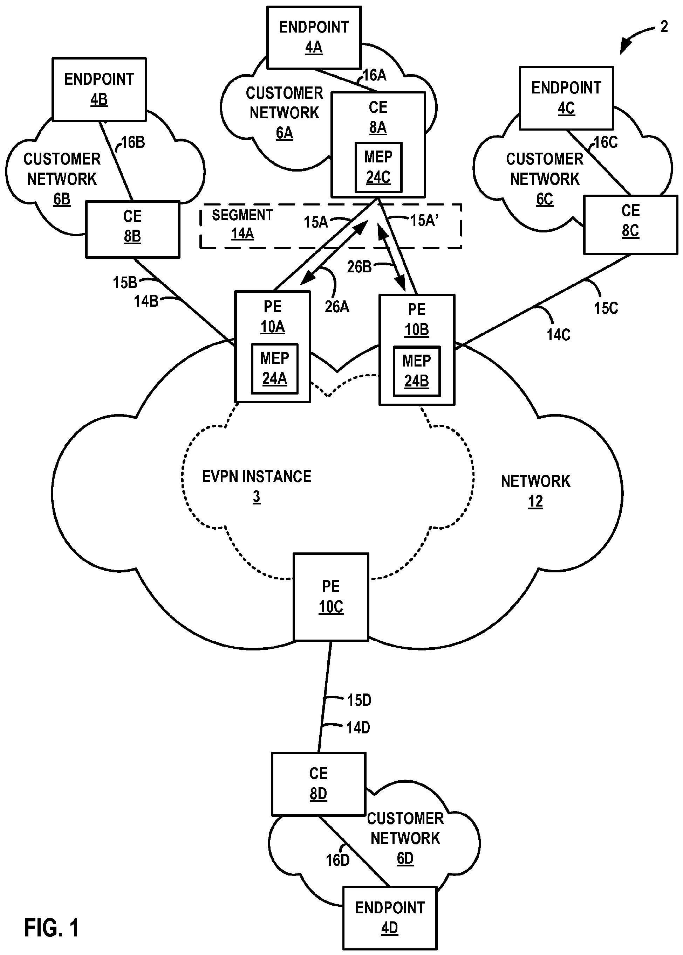

FIG. 1 is a block diagram illustrating a network system in which one or more network devices propagate a client-facing interface state to a customer edge network device using connectivity fault management in response to a designated forwarder election change, in accordance with the techniques described in this disclosure.

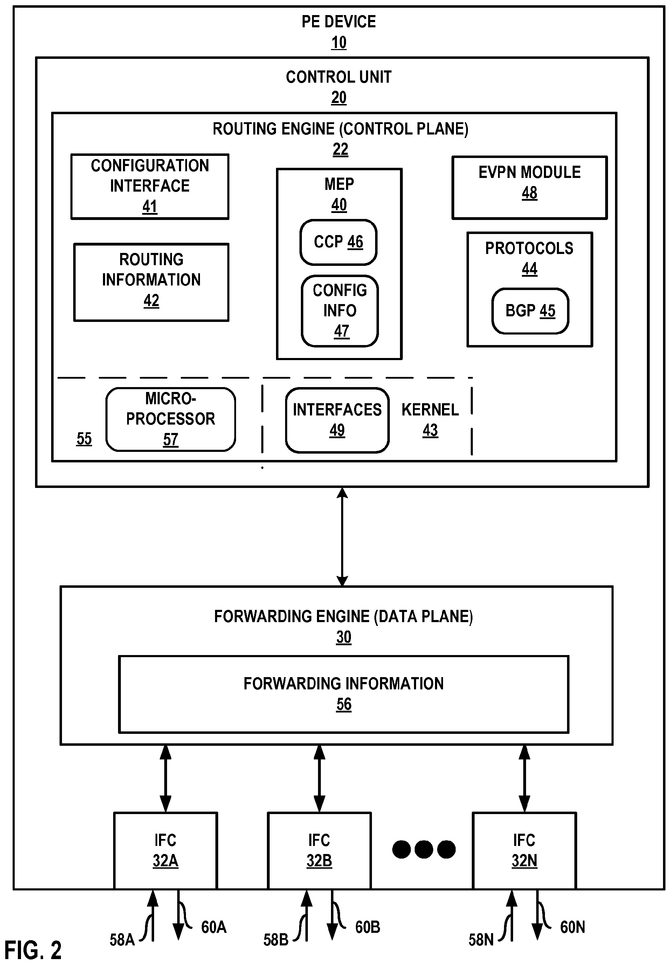

FIG. 2 is a block diagram illustrating an example of a provider edge network device according to the techniques described herein.

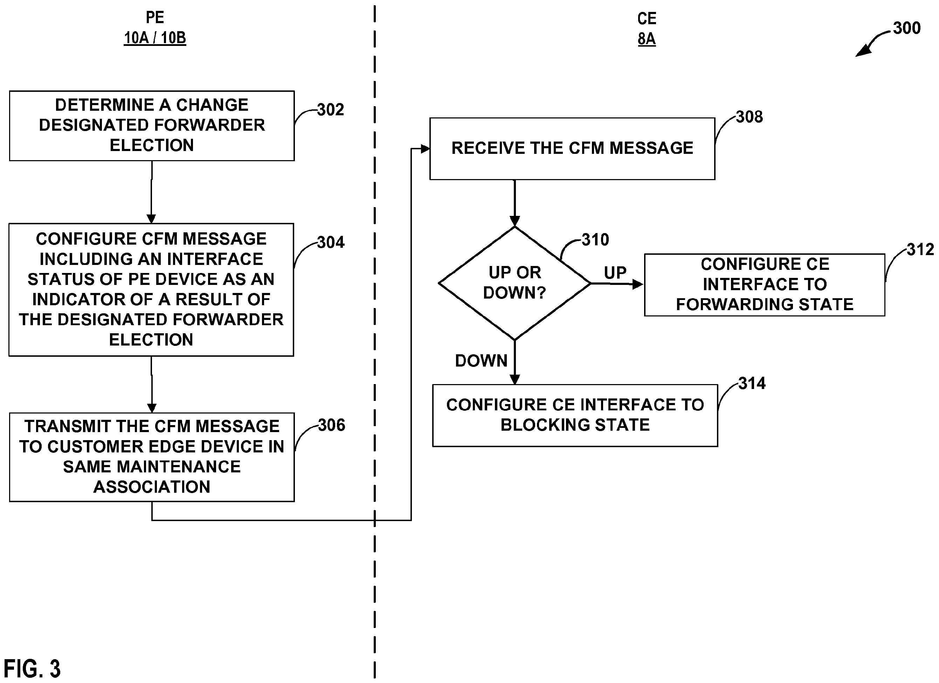

FIG. 3 is flowchart illustrating an example operation of a provider edge network device for propagating a client-facing interface state to a customer edge network device using connectivity fault management in response to a designated forwarder election change, in accordance with the techniques described in this disclosure.

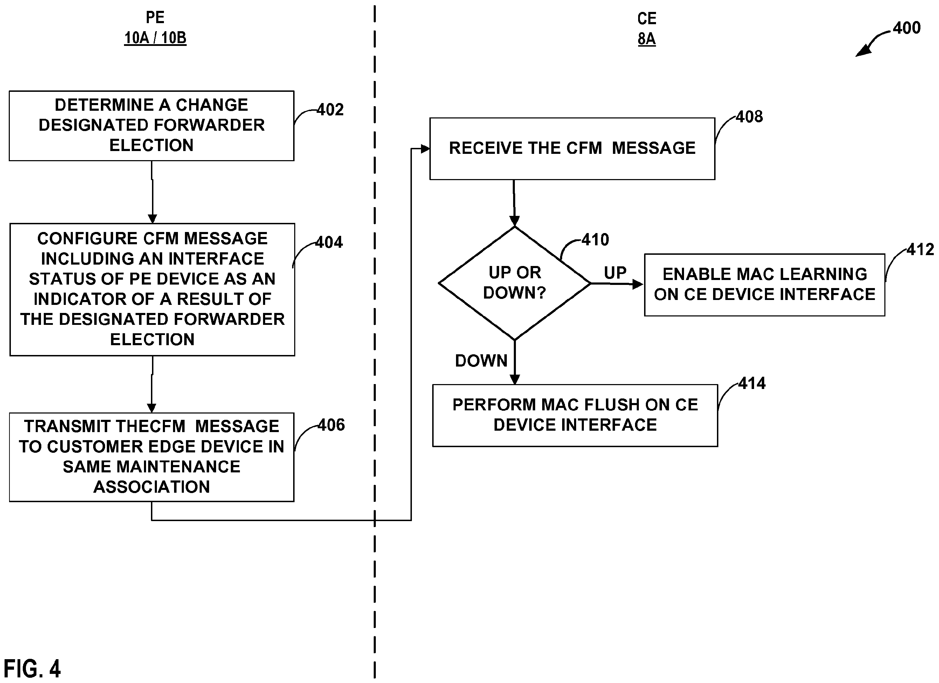

FIG. 4 is a flowchart illustrating another example operation of a provider edge network device for propagating a client-facing interface state to a customer edge network device using connectivity fault management in response to a designated forwarder election change, in accordance with the techniques described in this disclosure.

Like reference characters denote like elements throughout the figures and text.

### DETAILED DESCRIPTION

FIG. 1 is a block diagram illustrating a network system 2 in which one or more network devices propagate a client-facing interface state to a customer edge network device using connectivity fault management in response to a designated forwarder election change, in accordance with the techniques described in this disclosure. As shown in FIG. 1, network system 2 includes a network 12 and customer networks 6A-6D ("customer networks 6"). Network 12 may represent a public network that is owned and operated by a service provider to interconnect a plurality of edge networks, such as customer networks 6. Network 12 is an L3 network in the sense that it natively supports L3 operations as described in the OSI model. Common L3 operations include those performed in accordance with L3 protocols, such as the Internet protocol ("IP"). L3 is also known as a "network layer" in the OSI model and the "IP layer" in the TCP/IP model, and the term L3 may be used interchangeably with "network layer" and "IP" throughout this disclosure. As a result, network 12 may be referred to herein as a Service Provider ("SP") network or, alternatively, as a "core network" considering that network 12 acts as a core to interconnect edge networks, such as customer networks 6.

Network 12 may provide a number of residential and business services, including residential and business class data services (which are often referred to as "Internet services" in that these data services permit access to the collection of publically accessible networks referred to as the Internet), residential and business class telephone and/or voice services, and residential and business class television services. One such business class data service offered by a service provider intermediate network 12 includes L2 EVPN service. Network 12 represents an L2/L3 switch fabric for one or more customer networks that may implement an L2 EVPN service. An EVPN is a service that provides a form of L2 connectivity across an intermediate L3 network, such as network 12, to interconnect two or more L2 customer networks, such as L2 customer networks 6, that may be located in different geographical areas (in the case of service provider network implementation) and/or in different racks (in the case of a data center implementation). Often, EVPN is transparent to the customer networks in that these customer networks are not aware of the intervening intermediate network and instead act and operate as if these customer networks were directly connected and form a single L2 network. In a way, EVPN enables a form of a transparent local area network ("LAN") connection between two customer sites that each operates an L2 network and, for this reason, EVPN may also be referred to as a "transparent LAN service."

In the example of FIG. 1, provider edge network devices 10A-10C (collectively, "PEs 10") provide customer endpoints 4A-4D (collectively, "endpoints 4") associated with customer networks 6 with access to network 12 via customer edge network devices 8A-8D (collectively, "CEs 8"). PEs 10 may represent other types of PE devices capable of performing PE operations for an Ethernet Virtual Private Network ("EVPN").

PEs 10 and CEs 8 may each represent a router, switch, or other suitable network devices that participates in a L2 virtual private network ("L2VPN") service, such as an EVPN. Each of endpoints 4 may represent one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. The configuration of network 2 illustrated in FIG. 1 is merely an example. For example, an enterprise may include any number of customer networks 6. Nonetheless, for ease of description, only customer networks 6A-6D are illustrated in FIG. 1.

Although additional network devices are not shown for ease of explanation, it should be understood that network 2 may comprise additional network and/or computing devices such as, for example, one or more additional switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Moreover, although the elements of system 2 are illustrated as being directly coupled, it should be understood that one or more additional network elements may be included along any of the illustrated links 15A, 15A', 15B, 15C, 15D, 16A, 16B, 16C, and 16D, such that the network elements of system 2 are not directly coupled.

To configure an EVPN, a network operator of network 12 configures, via configuration or management interfaces, various devices included within network 12 that interface with L2 customer networks 6. The EVPN configuration may include an EVPN instance ("EVI") 3, which consists of one or more broadcast domains. EVPN instance 3 is configured within intermediate network 12 for customer networks 6 to enable endpoints 4 within customer networks 6 to communicate with one another via the EVI as if endpoints 4 were directly connected via a L2 network. Generally, EVI 3 may be associated with a virtual routing and forwarding instance ("VRF") (not shown) on a PE router, such as any of PE devices 10A-10C. Consequently, multiple EVIs may be configured on PEs 10 for Ethernet segments 14A-14D (collectively, "Ethernet segments 14"), each providing a separate, logical L2 forwarding domain. In this way, multiple EVIs may be configured that each includes one or more of PE routers 10A-10D. As used herein, an EVI is an EVPN routing and forwarding instance spanning PE devices 10A-10C participating in the EVI. Each of PEs 10 is configured with EVI 3 and exchanges EVPN routes to implement EVI 3.

As part of establishing EVI 3, PEs 10A-10D trigger EVPN designated forwarder election for multi-homed Ethernet segment 14A. In EVPN, a CE device is said to be multi-homed when it is coupled to two physically different PE devices on the same EVI when the PE devices are resident on the same physical Ethernet segment. For example, CE 8A is coupled to PEs 10A and 10B via links 15A and 15A', respectively, where PEs 10A and 10B are capable of providing L2 customer network 6A access to EVPN for via CE 8A. In instances where a given customer network (such as customer network 6A) may couple to network 12 via two different and, to a certain extent, redundant links, the customer network may be referred to as being "multi-homed." In this example, CE 8A is coupled to two different PEs 10A and 10B via links 15A and 15A' and are multi-homed to PEs 10A and 10B. Multi-homed networks are often employed by network operators so as to improve access to EVPN provided by network 12 should a failure in one of links 15A and 15A' occur. When a CE device is multi-homed to two or more PE routers, either one or all of the multi-homed PE routers are used to reach the customer site depending on the multi-homing mode of operation. The PE router that assumes the primary role for forwarding BUM traffic to the CE device is called the designated forwarder ("DF" or "DF router"). In a typical EVPN configuration, the multi-homing PE devices (e.g., 10A, 10B) participate in DF election for each Ethernet segment identifier (ESI), such as the ESI for Ethernet segment 14A.

In a single-active EVPN mode of operation (sometimes referred to as active-standby), one of the links 15A or 15A' forming Ethernet segment 14A is considered active in that one of PEs 10A or 10B is configured to actively exchange data traffic with CE 8A via Ethernet segment 14A. For example, in EVPN, if PE 10A is elected as a DF router in multi-homed Ethernet segment 14A, PE 10A marks its client-facing interface in an "up" state such that the DF forwards traffic received from the core network in the egress direction towards Ethernet segment 14A to multi-homed CE 8A. If PE 10B is a non-DF router in multi-homed Ethernet segment 14A, PE 10B marks its client-facing interface in a "down" state such that received packets are dropped and traffic is not forwarded in the egress direction towards Ethernet segment 14A.

In the example of FIG. 1, PE 10A is initially elected the DF router. In the event that PE 10B is changed to the DF, such as in response to a link failure, port failure, or other event, CE 8A may continue forwarding traffic towards PE 10A along link 15A as long as the entry in a bridge table for CE 8A indicates that a source MAC address behind CE 8D is reachable via link 15A. With conventional techniques, CE 8A is generally unaware of the DF election change until CE 8A receives traffic from PE 10B (as the new DF) and learns, from traditional MAC address learning techniques, that the source MAC addresses for devices behind CE 8D are now reachable through PE 10B. As a result, without actively informing CE 8A of the new DF election, CE 8A may continue forwarding outbound traffic to the initially-configured DF (PE 10A) based on the out-of-date MAC addresses associated with link 15A in the bridge table, instead of forwarding the traffic to the newly-configured DF (PE 10B) with link 15A'. PE 10A, as the new non-DF, has a client-facing interface marked in the "down" state by which PE 10A drops packets it receives from CE 8A.

In accordance with the techniques described herein, rather than waiting to update the source MAC addresses in the bridge table of the change in DF election through traditional MAC address learning techniques, a PE device may, in response to a DF election change, employ CFM to facilitate an active propagation of a client-facing interface state of a PE device to a CE device based on a change in DF election to trigger an update to the bridge table.

One or more of PEs 10 and/or one or more of CEs 8 may implement Operations, Administration, and Maintenance ("OAM") techniques, such as CFM as described in the Institute of Electrical and Electronics Engineers (IEEE) 802.1ag standard. CFM may generally enable discovery and verification of a path, through network devices and networks, taken by data units, e.g., frames or packets, addressed to and from specified network users, e.g., customer networks 6. Typically, CFM may collect interface status of network devices within layer 2 networks.

CFM generally provides a set of protocols by which to provide status updates of network devices and/or perform fault management. One protocol of the CFM set of protocols may involve a periodic transmission of CFM messages, e.g., CFM messages 26A, 26B (collectively, "CFM messages 26") to determine, verify or otherwise check continuity between two endpoints (described below) and may be referred to as a "Continuity Check Protocol." More information regarding CFM in general and the CFM set of protocols, including the continuity check protocol, can be found in an Institute of Electrical and Electronics Engineers (IEEE) draft standard, titled "Virtual Bridged Local Area Networks - Amendment 5: Connectivity Fault Management," by the LAN MAN Standards Committee, dated June 18, 2007.

In accordance with CFM, one or more users or administrators of customer networks 6 may establish various abstractions useful for managing maintenance operations. For example, the administrators may establish a Maintenance Domain ("MD") specifying those of network devices that support CFM maintenance operations. In other words, the MD specifies the network or part of the network for which status in connectivity may be managed. The administrator may, in establishing or defining the MD, assign a maintenance domain name to the MD, which represents a MD identifier that uniquely identifies a particular MD. It is assumed for purposes of illustration that the MD includes not only PEs 10 and CEs 8 but also additional PEs and CEs not shown in FIG. 1.

The administrators may further sub-divide the MD into one or more Maintenance Associations ("MA"). MA is a logical grouping that generally comprises a set of PEs 10 and CEs 8 included within the MD and established to verify the integrity and/or status of a single service instance. A service instance may, for example, represent a portion, e.g., network devices, of a provider network that a given customer can access to query a status of services delivered for that customer. As one example, the administrators may configure an MA to include CE 8A and PEs 10A, 10B. To establish the MA, the administrators may configure a Maintenance Association End Point (MEP) 24A-24C ("MEPs 24") within each one of the network devices monitored, e.g., CE 8A and PEs 10A, 10B. While shown as including a single MEP 24, CE 8A and PEs 10A, 10B may include a plurality of MEPs 24, one for each of a plurality of service instances. MEPs 24 may each represent an actively managed CFM entity that generates and receives CFM Protocol Data Units ("PDUs") and tracks any responses. In other words, each of MEPs 24 represents an endpoint of the same MA.

The administrators may, when establishing the MA, define an MA IDentifier ("MAID") and an MD level. The MA identifier may comprise an identifier that uniquely identifies the MA within the MD. The MA identifier may comprise two parts, the MD name assigned to the MD in which the MA resides and a MA name. The MD level may comprise an integer. In other words, the MD level may segment the MD into levels at which one or more MAs may reside. The administrators may then, when configuring MEPs 24, associate MEPs 24 to the MA by configuring each of MEPs 24 with the same MA identifier and the same MD level. In this respect, the MA identifier comprises the set of MEPs 24, each configured within the same MAID and MD level, established to verify the integrity and/or status of a single service instance.

Once configured with the above associations, PEs 10 may establish one or more CFM sessions to monitor network devices of a single service instance. For example, PEs 10A, 10B may establish CFM sessions with CE 8A over links 15A, 15A' of Ethernet segment 14A to communicate client-facing interface statuses of PEs 10A, 10B. With the CFM sessions, PEs 10A, 10B may communicate CFM messages 26 to CE 8A regarding their interface status. CFM messages 26 include various type, length, and value (TLV) elements to provide the client-facing interface state of PE devices. TLV elements may be configured to provide optional information in CFM PDUs. For example, CFM messages 26 may include an interface status TLV that indicates the status of the interface on which the MEP transmitting the Continuity Check Message ("CCM") is configured. An interface status TLV, for example, may be structured according to the following format of Table 1:

**Table 1: Interface Status TLV**

| |
|---|
| Type = 4 (1 octet) |
| Length (2-3 octets) |
| Interface Status Value (4 octets) |

In one example, the interface status value may represent the client-facing interface state of a PE device. For example, the interface status TLV may include interface statuses of "up" or "down" to represent the state of client-facing interfaces for which PEs 10 are currently configured. In some examples, a newly elected DF router may send an interface status TLV with an interface status value of "up" to indicate a current status of the client-facing interface for the DF router in response to a DF election change. In some examples, a non-DF router may send an interface status TLV with an interface status value of "down" to indicate a current status of the client-facing interface for the non-DF router in response to the DF election change. In other words, MEPs 24 of PEs 10A, 10B may each be configured with one or more MEPs 24 with which it expects to exchange (or transmit and receive) CCM messages announcing, in response to a DF election change, the current client-facing interface status of the transmitting one of MEPs 24.

MEPs 24 may execute the continuity check protocol to automatically, e.g., without any administrator or other user oversight after the initial configuration, exchange these CCM messages according to a configured or, in some instances, set period. MEPs 24 may, in other words, implement the continuity check protocol to collect the status of interfaces.

In operation, PEs 10A and 10B are interconnected to multi-homed CE 8A through links 15A, 15B that make up Ethernet segment 14A. As part of establishing EVPN instance 3, PEs 10A and 10B trigger EVPN designated forwarder ("DF") election for multi-homed Ethernet segment 14A. PE 10A may initially be elected as the DF for Ethernet segment 14A and assumes the primary role for forwarding BUM traffic. As the DF, PE 10A configures its client-facing interface coupled to link 15A in the "up" state. Since PEs 10A, 10B are configured as single-active, PE 10B may initially be configured as a non-DF router such that its client-facing interface coupled to link 15A' is configured in the "down" state, also referred to as a "blocking" state, to drop BUM packets it receives.

As BUM traffic flows from customer network 6A to network 12, CE 8A floods the traffic onto Ethernet segment 14A by PE 10A as the DF. Based on the configuration of the current state, PE 10A forwards the BUM traffic to EVPN instance 3. The non-DF PE 10B drops all of the traffic received from CE 8A. For BUM traffic received from EVPN instance 3, the DF PE 10A of Ethernet segment 14A forwards the BUM traffic to CE 8A whereas the non-DF PE 10B drops the traffic.

In the event that PE 10B is changed to the DF, the client-facing interface of PE 10B coupled to link 15A' is changed from the "down" state to the "up" state, whereas the client-facing interface of PE 10A coupled to link 15A is changed from the "up" state to the "down" state. As described herein, in response to the DF election change, PEs 10A and 10B utilize the OAM protocol to transmit respective CFM messages 26 of a current state of a client-facing interface indicative of the DF election change to multi-homed CE 8A. For example, PE 10B, as the newly elected DF router, may transmit the changed interface status within a TLV of CFM message 26B, where the interface status value of "up" is set within the TLV in response to the change in state (from "down" to "up") of the client-facing interface of PE 10B. Similarly, PE 10A, now the non-DF router, may transmit the changed interface status within a TLV of CFM message 26A in response to the change in state (from "up" to "down") of the client-facing interface of PE 10A.

CE 8A processes the CFM messages 26, including interface status TLVs, to determine a change in the packet forwarding state of PEs 10A, 10B. For example, in response to receiving CFM message 26A that indicates the client-facing interface status change of PE 10A (e.g., from "up" to "down"), CE 8A may update its bridge table to reflect the current interface for the source MAC address behind CE 8D. In one example, the bridge table of CE 8A, in accordance with the initial DF selection, may indicate that the source MAC address behind CE 8D is an interface associated with link 15A. In response to receiving any one of the CFM messages 26, CE 8A may update the bridge table to indicate that the source MAC address behind CE 8 is now reachable via link 15A' to reflect the changed DF election.

In some examples, a CE device may act as a bridge or router. Where a CE device is acting as a bridge or router, an interface status value of "down" in the CFM message, e.g., CFM message 26A, may trigger CE 8A to change its interface to link 15A to a blocking state. In some examples, an interface status value of "up" in the CFM message 26B may trigger CE 8A to change its interface to link 15A' to a forwarding state. In another example where CE 8A is acting as a bridge, an interface status value of "down" in CFM message 26A may trigger CE 8A to perform a MAC address flush on its interface to link 15A. In response to the MAC address flush, CE 8A will no longer send packets to an interface currently marked "down". Where CFM message 26B has an interface status value of "up", CE 8A may learn the MAC address on its interface to link 15A'. In this way, when a CE device is acting as a bridge, the propagation of the client-facing interface status to the CE device in response to a DF election change provides loop avoidance and/or faster convergence. When a CE device is acting as a router, the propagation of the client-facing interface status to the CE device in response to a DF election change can be used to provide layer 3 multi-homing.

FIG. 2 is a block diagram illustrating an example of a provider edge network device according to the techniques described herein. PE device 10 is described with respect to PEs 10A, 10B of FIG. 1, but may be performed by any PE network device.

As shown in FIG. 2, PE device 10 includes a control unit 20 having a routing engine 22 (control plane), and control unit 20 is coupled to forwarding engine 30 (data plane). Forwarding engine 30 is associated with one or more interface cards 32A-32N ("IFCs 32") that receive packets via inbound links 58A-58N ("inbound links 58") and send packets via outbound links 60A-60N ("outbound links 60"). IFCs 32 are typically coupled to links 58, 60 via a number of interface ports (not shown). Inbound links 58 and outbound links 60 may represent physical interfaces, logical interfaces, or some combination thereof. For example, any of links 60 may be associated with a client-facing interface of FIG. 1.

Elements of control unit 20 and forwarding engine 30 may be implemented solely in software, or hardware, or may be implemented as combinations of software, hardware, or firmware. For example, control unit 20 may include one or more processors 57 that may represent, one or more microprocessors, digital signal processors ("DSPs"), application specific integrated circuits ("ASICs"), field programmable gate arrays ("FPGAs"), or any other equivalent integrated or discrete logic circuitry, or any combination thereof, which execute software instructions. In that case, the various software modules of control unit 20 may comprise executable instructions stored, embodied, or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable storage media may include random access memory ("RAM"), read only memory ("ROM"), programmable read only memory (PROM), erasable programmable read only memory ("EPROM"), electronically erasable programmable read only memory ("EEPROM"), nonvolatile random access memory ("NVRAM"), flash memory, a hard disk, a CD-ROM, a floppy disk, a cassette, a solid state drive, magnetic media, optical media, or other computer-readable media. Computer-readable media may be encoded with instructions corresponding to various aspects of PE device 10, e.g., protocols, processes, and modules. Control unit 20, in some examples, retrieves and executes the instructions from memory for these aspects.

Routing engine 22 operates as a control plane for PE device 10 and includes an operating system that provides a multi-tasking operating environment for execution of a number of concurrent processes. Routing engine 22 includes a kernel 43, which provides a run-time operating environment for user-level processes. Kernel 43 may represent, for example, a UNIX operating system derivative such as Linux or Berkeley Software Distribution ("BSD"). Kernel 43 offers libraries and drivers by which user-level processes may interact with the underlying system. Hardware environment 55 of routing engine 22 includes processor 57 that executes program instructions loaded into a main memory (not shown in FIG. 2) from a storage device (also not shown in FIG. 2) in order to execute the software stack, including both kernel 43 and processes executing on the operating environment provided by kernel 43.

Kernel 43 includes an interfaces table 49 that represents a data structure that includes a corresponding entry for each interface configured for PE device 10. For example, interfaces table 49 may include an entry for a client-facing interface status of FIG. 1. Entries for interfaces table 49 may include a current state of the client-facing interface, i.e., an "up" or "down" state, of PE device 10. In some examples, as PE device 10 changes from designated forwarder to non-designated forwarder, kernel 43 changes the client-interface status entry from an "up" state to a "down" state in interfaces table 49 for a corresponding IFC 32 associated with one of outbound links 60. In some examples, as PE device 10 changes from non-designated forwarder to a designated forwarder, the kernel 43 changes the client-facing interface status entry from a "down" state to an "up" state in interfaces table 49 for a corresponding IFC 32 associated with one of outbound links 60.

Kernel 43 provides an operating environment that executes various protocols 44 at different layers of a network stack, including protocols for implementing EVPN networks. For example, routing engine 22 includes network protocols that operate at a network layer of the network stack. Protocols 44 provide control plane functions for storing network topology in the form of routing tables or other structures, executing routing protocols to communicate with peer routing devices and maintain and update the routing tables, and provide management interface(s) to allow user access and configuration of PE device 10. That is, routing engine 22 is responsible for the maintenance of routing information 42 to reflect the current topology of a network and other network entities to which PE device 10 is connected. In particular, routing protocols 44 periodically update routing information 42 to reflect the current topology of the network and other entities based on routing protocol messages received by PE device 10.

In the example of FIG. 2, routing protocols 44 include the Border Gateway Protocol ("BGP") 45 for exchanging routing information with other routing devices and for updating routing information 42. In EVPN, PE device 10 may use BGP to advertise to other PE devices the MAC addresses PE device 10 as learned from local customer edge network devices to which PE device 10 is connected. In particular, PE device 10 may use a BGP route advertisement message to announce reachability information for the EVPN, where the BGP route advertisement specifies one or more MAC addresses learned by PE device 10 instead of L3 routing information. PE device 10 updates routing information 42 based on the BGP route advertisement message. Routing engine 22 may include other protocols not shown in FIG. 2, such as an MPLS label distribution protocol and/or other MPLS protocols.

Routing information 42 may include information defining a topology of a network, including one or more routing tables and/or link-state databases. Typically, the routing information defines routes (i.e., series of next hops) through a network to destinations / prefixes within the network learned via a distance-vector routing protocol (e.g., BGP) or defines the network topology with interconnected links learned using a link state routing protocol (e.g., IS-IS or OSPF). In contrast, forwarding information 56 is generated based on selection of certain routes within the network and maps packet key information (e.g., L2 / L3 source and destination addresses and other select information from a packet header) to one or more specific next hops forwarding structures within forwarding information 56 and ultimately to one or more specific output interface ports of IFCs 32. Routing engine 22 may generate forwarding information 56 in the form of a radix tree having leaf nodes that represent destinations within the network.

Routing engine 22 also includes an EVPN module 48 that performs L2 learning using BGP 45. EVPN module 48 may maintain MAC tables for each EVI established by PE device 10, or in alternative examples may maintain one or more MAC tables that are independent of each respective EVI. The MAC tables, for instance, may represent a virtual routing and forwarding table of VRFs for an EVI configured for the VRF. EVPN module 58 may perform local L2/L3 (e.g., MAC/IP) binding learning by, e.g., using MAC information received by PE device 10.

Routing engine 22 includes a maintenance endpoint ("MEP") 40 that may represent a hardware or a combination of hardware and software of control unit 20 that implements one or more of the CFM suit of protocols, such as Continuity Check Protocol ("CCP") 46. PE device 10 may use CCP 46 to periodically transmit Continuity Check Messages ("CCM") to actively propagate a client-facing interface status indicating a DF election change to another MEP, e.g., CE 8A of FIG. 1. For example, PE device 10 may actively manage CFM Protocol Data Units in CCM messages, including the interface status TLVs indicating the current status of IFCs 32 of PE device 10. In one example, in response to determining that a client-facing interface status entry in the interfaces table 49 has changed as a result of a DF election change, routing engine 22 uses CCP 46 to configure CFM messages (e.g., CFM messages 26 of FIG. 1) including an interface status value of the state of IFC 32 (as "up" or "down") to indicate a result of the DF election change. PE device 10 may use CCP 46 to propagate these CFM messages to the CE devices configured as a maintenance endpoint in the same maintenance association as PE device 10. MEPs 40 may represent MEPs 24, as described above with respect to FIG. 1. MEP 40 may include other protocols not shown in FIG. 2, such as Loopback Protocol (LBP) and/or other protocols to implement Connectivity Fault Management techniques.

Routing engine 22 includes a configuration interface 41 that receives and may report configuration data for PE device 10. Configuration interface 41 may represent a command line interface; a graphical user interface; Simple Network Management Protocol ("SNMP"), Netconf, or another configuration protocol; or some combination of the above in some examples. Configuration interface 41 receives configuration data configuring the PE device 10, and other constructs that at least partially define the operations for PE device 10, including the techniques described herein. For example, an administrator may, after powering-up, activating or otherwise enabling PE device 10 to operate within a network, interact with control unit 20 via configuration interface 41 to configure MEP 40. The administrator may interact with configuration interface 41 to input configuration information 47 ("config info 47") that includes the various parameters and information described above to establish, initiate, or otherwise enable MEP 40 to configure and propagate a client-facing interface status of PE device 10 to a CE device in response to a designated forwarder election change.

Once configured, PE device 10 may transmit CFM messages to a CE device within the same maintenance association as PE device 10. As described above, MEP 40 configures CFM messages indicating the current interface status of PE device 10 based on a designated forwarder election change. The CFM messages are then forwarded to the CE device through output interface ports of IFCs 32.

Forwarding engine 30 represents hardware and logic functions that provide high-speed forwarding of network traffic. Forwarding engine 30 typically includes a set of one or more forwarding chips programmed with forwarding information that maps network destinations with specific next hops and the corresponding output interface ports. In general, when PE device 10 receives a packet via one of inbound links 58, forwarding engine 30 identifies an associated next hop for the data packet by traversing the programmed forwarding information based on information within the packet. Forwarding engine 30 forwards the packet on one of outbound links 60 mapped to the corresponding next hop.

In the example of FIG. 2, forwarding engine 30 includes forwarding information 56. In accordance with routing information 42, forwarding engine 30 stores forwarding information 56 that maps packet field values to network destinations with specific next hops and corresponding outbound interface ports. For example, routing engine 22 analyzes routing information 42 and generates forwarding information 56 in accordance with routing information 42. Forwarding information 56 may be maintained in the form of one or more tables, link lists, radix trees, databases, flat files, or any other data structures.

Forwarding engine 30 stores forwarding information 56 for each Ethernet VPN Instance (EVI) established by PE device 10 to associate network destinations with specific next hops and the corresponding interface ports. Forwarding engine 30 forwards the data packet on one of outbound links 60 to the corresponding next hop in accordance with forwarding information 56 associated with an Ethernet segment. At this time, forwarding engine 30 may push and/or pop labels from the packet to forward the packet along a correct LSP.

FIG. 3 is flowchart illustrating an example operation of a provider edge network device for propagating a client-facing interface state to a customer edge device in response to a designated forwarder election change, in accordance with the techniques described herein. Operation 300 is described with respect to PEs 10A, 10B and CE 8A of FIG. 1, but may be performed by any PE and/or CE network devices. Operation 300 is described wherein CE 8A is acting as a bridge or router.

In the example of FIG. 3, PE 10A may initially be elected as a designated forwarder (DF) for Ethernet segment 14A, whereas PE 10B may be a non-designated forwarder (non-DF) for Ethernet segment 14A. PE 10A and/or PE 10B may determine a change in designated forwarder election for Ethernet segment 14A (302). For example, PE 10A may change from DF to the non-DF, whereas PE 10B changes from non-DF to the DF. In response to the designated forwarder election change, PE 10A may determine that its client-facing interface that is coupled to a link to CE 8A changes from an "up" state to a "down" state. Alternatively, or in addition to, PE 10B may determine that its client-facing interface that is coupled to another link to CE 8A changes from a "down" state to an "up" state.

In response to detecting the change in DF election, PEs 10A and/or PE 10B may configure a CFM message including an interface status of its respective client-facing interface (304). In some examples, in response to a change in DF election, PE 10B, as the newly elected DF router, may configure a CFM message, including an interface status TLV message with an interface status of "up" for PE 10B as an indicator of a result of the DF election. In some examples, in response to the change in DF election, PE 10A, as the new non-DF router, may configure a CFM message, including an interface status TLV message with an interface status of "down" for PE 10A as an indicator of a result of the DF election.

PEs 10A and/or PE 10B may transmit the CFM message to CE 8A that is within the same maintenance association as the PEs devices 10 (306).

In operation 300, CE 8A may be a router or bridge within the same maintenance association as PE device 10, and may receive the CFM message indicating the state of a respective one of the PE devices 10, wherein the CFM message is an indication of a result of the DF election change (308).

CE 8A may then determine the client-facing interface status of PE 10A and/or PE 10B from the CFM message configured as an indicator of a result of the DF election change (310). In this way, CE 8A may actively learn of the client-facing interface status of a PE device 10 as a result of a DF election change without learning, through traditional MAC address learning techniques, that an updated source MAC address for devices behind a remote CE device, e.g., CE 8D of FIG. 1, is now reachable through PE 10B. For example, CE 8A, upon receiving the CFM message including the interface status TLV indicating the interface status of PE 10A and/or PE 10B, determines whether the CFM message indicates an "up" or "down" interface state for the client-facing interface. If the CFM message includes an interface status of "up", CE 8A is configured to move its corresponding interface to PE device 10 that delivered the CFM message to a forwarding state (312). If the CFM message includes an interface status of "down", CE 8A is configured to move its corresponding interface to PE device 10 that delivered the CFM message to a blocking state (314). In this way, when a CE device is acting as a router, the propagation of the client-facing interface status to the CE device in response to a DF election change can be used to provide layer 3 multi-homing.

FIG. 4 is flowchart illustrating another example operation of a provider edge network device for propagating a client-facing interface state to a customer edge device in response to a designated forwarder election change, in accordance with the techniques described herein. Operation 400 is described with respect to PEs 10A, 10B and CE 8A of FIG. 1, but may be performed by any PE and/or CE network devices. Operation 400 is described wherein CE 8A is acting as a bridge.

In the example of FIG. 4, PE 10A may initially be elected as a designated forwarder (DF) for Ethernet segment 14A, whereas PE 10B may be a non-designated forwarder (non-DF) for Ethernet segment 14A. PE 10A and/or PE 10B may determine a change in designated forwarder election for Ethernet segment 14A (402). For example, PE 10A may change from DF to the non-DF, whereas PE 10B changes from non-DF to the DF. In response to the designated forwarder election change, PE 10A may determine that its client-facing interface that is coupled to a link to CE 8A changes from an "up" state to a "down" state. Alternatively, or in addition to, PE 10B may determine that its client-facing interface that is coupled to another link to CE 8A changes from a "down" state to an "up" state.

In response to detecting the change in DF election, PEs 10A and/or PE 10B may configure a CFM message including an interface status of its respective client-facing interface (404). In some examples, in response to a change in DF election, PE 10B, as the newly elected DF router, may configure a CFM message, including an interface status TLV message with an interface status of "up" for PE 10B as an indicator of a result of the DF election. In some examples, in response to the change in DF election, PE 10A, as the new non-DF router, may configure a CFM message, including an interface status TLV message with an interface status of "down" for PE 10A as an indicator of a result of the DF election.

PEs 10A and/or PE 10B may transmit the CFM message to CE 8A that is within the same maintenance association as the PEs devices 10 (406).

In operation 400, CE 8A may be a bridge within the same maintenance association as PE device 10, and may receive the CFM message indicating the state of a respective one of the PE devices 10, wherein the CFM message is as an indication of a result of the DF election change (408).

CE 8A may then determine the client-facing interface status of PE 10A and/or PE 10B from the CFM message configured as an indicator of a result of the DF election change (410). In this way, CE 8A may actively learn of the client-facing interface status of a PE device 10 as a result of a DF election change without learning, through traditional MAC address learning techniques, that an updated source MAC address for devices behind a remote CE device, e.g., CE 8D of FIG. 1, is now reachable through PE 10B. For example, CE 8A, upon receiving the CFM message including the interface status TLV indicating the interface status of PE 10A and/or PE 10B, determines whether the CFM message indicates an "up" or "down" interface state for the client-facing interface. If the CFM message includes an interface status of "up", CE 8A is configured to enable MAC address learning on its corresponding interface to PE device 10 that delivered the CFM message (412). If the CFM message includes an interface status of "down", CE 8A is configured to perform a MAC flush to its corresponding interface to the PE device 10 that delivered the CFM message (414). In response to the MAC flush, CE 8A will no longer send packets to an interface currently marked "down". In this way, when a CE device is acting as a bridge, the propagation of the client-facing interface status to the CE device in response to a DF election change provides loop avoidance and/or faster convergence.

The techniques of this disclosure may be implemented in a wide variety of devices or apparatuses, including a network device, an integrated circuit (IC) or a set of ICs (i.e., a chip set). Any components, modules or units have been described provided to emphasize functional aspects and does not necessarily require realization by different hardware units. The techniques described herein may also be implemented in hardware or any combination of hardware and software and/or firmware. Any features described as modules, units or components may be implemented together in an integrated logic device or separately as discrete but interoperable logic devices. In some cases, various features may be implemented as an integrated circuit device, such as an integrated circuit chip or chipset.

If implemented in software, the techniques may be realized at least in part by a computer-readable storage medium comprising instructions that, when executed in a processor, performs one or more of the methods described above. The computer-readable storage medium may be a physical structure, and may form part of a computer program product, which may include packaging materials. In this sense, the computer readable medium may be non-transitory. The computer-readable storage medium may comprise random access memory (RAM) such as synchronous dynamic random access memory (SDRAM), read-only memory (ROM), nonvolatile random access memory (NVRAM), electrically erasable programmable read-only memory (EEPROM), FLASH memory, magnetic or optical data storage media, and the like. A computer program product may additionally or alternatively comprise a computer-readable medium including a transient signal conveyance medium such as a carrier wave or signal

The code or instructions may be executed by one or more processors, such as one or more digital signal processors (DSPs), general purpose microprocessors, an application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated software modules or hardware modules configured for encoding and decoding, or incorporated in a combined video codec. Also, the techniques could be fully implemented in one or more circuits or logic elements.

Therefore, from one perspective there have been described techniques to provide designated forwarder state propagation to customer edge network devices using connectivity fault management (CFM) so as to ensure that customer edge (CE) network devices are aware of a change in designated forwarder election in an Ethernet Virtual Private Network (EVPN). In one example, a method includes determining a change in designated forwarder election from a provider edge (PE) network device to another PE device; in response to the change in designated forwarder election, configuring a message including at least a client-facing interface status of the first PE device, wherein the client-facing interface status included in the message is configured as an indicator of a result of the change in designator forwarder election; and transmitting the message to the multi-homed CE device

In addition to or as an alternative to the above, the following examples are described. The features described in any of the following examples may be utilized with any of the other examples described herein.

Example 1. A method comprising: determining, by a first provider edge (PE) device that implements an Ethernet Virtual Private Network (EVPN), a change in designated forwarder election associated with the first PE device and a second PE device, wherein the first PE device and the second PE device are coupled to a multi-homed customer edge (CE) device by an Ethernet segment; in response to the change in designated forwarder election, configuring, by the first PE device, a message including at least a client-facing interface status of the first PE device, wherein the client-facing interface status included in the message is configured as an indicator of a result of the change in designator forwarder election; and transmitting, by the first PE device, the message to the multi-homed CE device.

Example 2. The method of example 1, wherein determining the change in designated forwarder election includes determining a change of the first PE device from a designated forwarder for forwarding packets from the EVPN to the CE device to a non-designated forwarder, and wherein configuring the message comprises configuring the client-facing interface status included in the message as a down state as an indicator that the first PE device has changed from the designated forwarder to the non-designated forwarder.

Example 3. The method of example 1 or 2, wherein determining the change in designated forwarder election includes determining a change of the first PE device from a non-designated forwarder to a designated forwarder for forwarding packets from the EVPN to the CE device, and wherein configuring the message comprises configuring the client-facing interface status included in the message as an up state as an indicator that the first PE device has changed from the non-designated forwarder to the designated forwarder.

Example 4. The method of example 1, 2 or 3, wherein configuring the message comprises: configuring a Connectivity Fault Management (CFM) message including at least an Interface Status Type, Length, Value (TLV) indicating the client-facing interface status of the first PE device.

Example 5. A method comprising: receiving, by a customer edge (CE) device multi-homed to a plurality of provider edge (PE) devices that implement an Ethernet Virtual Private Network (EVPN), a message including a client-facing interface status of at least one of the plurality of PE devices, wherein the client-facing interface status included in the message is configured as an indicator of a result of a change in designator forwarder election associated with the plurality of PE devices; determining, by the CE device, the client-facing interface status of at least one of the plurality of PE devices from the message without learning, by traditional media access control (MAC) address learning techniques, an updated source MAC address behind a remote CE device.

Example 6. The method of claim 5, further comprising: in response to determining from the message the client-facing interface status of one of the plurality of PE devices is a down state, configuring, by the CE device, an interface of the CE device coupled to the one of the plurality of PE devices to a blocking state, wherein the CE device is a router.

Example 7. The method of example 5 or 6, further comprising: in response to determining from the message the client-facing interface status of one of the plurality of PE devices is an up state, configuring, by the CE device, an interface of the CE device coupled to the one of the plurality of PE devices to a forwarding state, wherein the CE device is a router.

Example 8. The method of example 5, 6 or 7, in response to determining from the message the client-facing interface status of one of the plurality of PE devices is a down state, configuring, by the CE device, Media Access Control (MAC) flush on an interface of the CE device coupled to the one of the plurality of PE devices, wherein the CE device is a bridge.

Example 9. The method of any of examples 5 to 8, in response to determining from the message the client-facing interface status of one of the plurality of PE devices is an up state, configuring, by the CE device, Media Access Control (MAC) address learning on an interface of the CE device coupled to the one of the plurality of PE devices, wherein the CE device is a bridge.

Example 10. A provider edge (PE) device comprising: one or more processors operably coupled to a memory, a routing engine having at least one processor coupled to a memory, wherein the routing engine executes software configured to: establish an Ethernet Virtual Private Network (EVPN) with one or more other PE devices; determine a change in designated forwarder election from the PE device to another PE device, wherein the PE device and the another PE device are coupled to a multi-homed customer edge (CE) device by an Ethernet segment; in response to the change in designated forwarder election, configure a message including at least a client-facing interface status of the PE device, wherein the client-facing interface status included in the message is configured as an indicator of a result of the change in designator forwarder election; and transmit the message to the multi-homed CE device.

Example 11. The PE device of example 10, wherein the change in designated forwarder election includes a change of the PE device from a designated forwarder for forwarding packets from the EVPN to the CE device to a non-designated forwarder, and wherein the client-facing interface status of the PE device includes a down state as an indicator that the PE device has changed from the designated forwarder to the non-designated forwarder.

Example 12. The method of example 10 or 11, wherein the change in designated forwarder election includes a change of the PE device from a non-designated forwarder to a designated forwarder for forwarding packets from the EVPN to the CE device, and wherein the client-facing interface status of the PE device includes an up state as an indicator that the PE device has changed from the non-designated forwarder to the designated forwarder.

Example 13. The PE device of example 10, 11 or 12, wherein the routing engine further comprises: a Maintenance Association End Point (MEP) configured for execution by the one or more processors to: implement a Continuity Check Protocol (CCP); configure the message as a Connectivity Fault Management (CFM) message including at least an Interface Status Type, Length, Value (TLV) indicating the client-facing interface status of the PE device.

Example 14. The PE device of example 13, wherein the TLV indicating the client-facing interface status of the PE device comprises a down state as an indicator of the result that the PE device is changed from a designated forwarder to a non-designated forwarder.

Example 15. The PE device of example 13, wherein the TLV indicating the client-facing interface status of the PE device comprises an up state as an indicator of the result that that the PE device is changed from a non-designated forwarder to a designated forwarder.

Example 16. A system comprising: a multi-homed customer edge (CE) device of a layer 2 network, the CE device configured to implement a Continuity Check Protocol (CCP); a first provider edge (PE) device of an intermediate layer 3 (L3) network, the first PE device configured to implement an Ethernet Virtual Private Network (EVPN) that is configured on the first PE device to provide layer 2 (L2) bridge connectivity to a customer network coupled to the CE device and to implement the CCP; a second PE device of the intermediate L3 network, the second PE device configured to implement the EVPN that is configured on the second PE device to provide L2 bridge connectivity to the customer network coupled to the CE device and to implement the CCP, wherein the first PE device and the second PE device are coupled to the multi-homed CE device, wherein the first PE device is initially elected as a designated forwarder and the second PE device is initially elected as a non-designated forwarder, and wherein the first PE device is configured to transmit a Connectivity Fault Maintenance (CFM) message to the CE device in response to a change in designated forwarder election associated with the first PE device and the second PE device, wherein the CFM message includes a client-facing interface status of the first PE device as an indicator of a result of the change in designated forwarder election.

Moreover, any of the specific features set forth in any of the examples described above may be combined into beneficial examples of the described techniques. That is, any of the specific features are generally applicable to all examples of the disclosure. Various examples of the techniques have been described. These and other examples are within the scope of the following claims.

## Claims

1. A method comprising:
determining, by a first provider edge (PE) device that implements an Ethernet Virtual Private Network (EVPN), a change in designated forwarder election associated with the first PE device and a second PE device, wherein the first PE device and the second PE device are coupled to a multi-homed customer edge (CE) device by an Ethernet segment;
in response to the change in designated forwarder election, configuring, by the first PE device, a message including at least a client-facing interface status of the first PE device, wherein the client-facing interface status included in the message is configured as an indicator of a result of the change in designator forwarder election; and
transmitting, by the first PE device, the message to the multi-homed CE device.

2. The method of claim 1,
wherein determining the change in designated forwarder election includes determining a change of the first PE device from a designated forwarder for forwarding packets from the EVPN to the CE device to a non-designated forwarder, and
wherein configuring the message comprises configuring the client-facing interface status included in the message as a down state as an indicator that the first PE device has changed from the designated forwarder to the non-designated forwarder.

3. The method of any of claims 1-2,
wherein determining the change in designated forwarder election includes determining a change of the first PE device from a non-designated forwarder to a designated forwarder for forwarding packets from the EVPN to the CE device, and
wherein configuring the message comprises configuring the client-facing interface status included in the message as an up state as an indicator that the first PE device has changed from the non-designated forwarder to the designated forwarder.

4. The method of any of claims 1-3, wherein configuring the message comprises:
configuring a Connectivity Fault Management (CFM) message including at least an Interface Status Type, Length, Value (TLV) indicating the client-facing interface status of the first PE device.

5. A method comprising:
receiving, by a customer edge (CE) device multi-homed to a plurality of provider edge (PE) devices that implement an Ethernet Virtual Private Network (EVPN), a message including a client-facing interface status of at least one of the plurality of PE devices, wherein the client-facing interface status included in the message is configured as an indicator of a result of a change in designator forwarder election associated with the plurality of PE devices;
determining, by the CE device, the client-facing interface status of at least one of the plurality of PE devices from the message without learning, by traditional media access control (MAC) address learning techniques, an updated source MAC address behind a remote CE device.

6. The method of claim 5, further comprising:
in response to determining from the message the client-facing interface status of one of the plurality of PE devices is a down state, configuring, by the CE device, an interface of the CE device coupled to the one of the plurality of PE devices to a blocking state,
wherein the CE device is a router.

7. The method of any of claims 5-6, further comprising:
in response to determining from the message the client-facing interface status of one of the plurality of PE devices is an up state, configuring, by the CE device, an interface of the CE device coupled to the one of the plurality of PE devices to a forwarding state,
wherein the CE device is a router.

8. The method of any of claims 5-7,
in response to determining from the message the client-facing interface status of one of the plurality of PE devices is a down state, configuring, by the CE device, Media Access Control (MAC) flush on an interface of the CE device coupled to the one of the plurality of PE devices,
wherein the CE device is a bridge.

9. The method of any of claims 5-8,
in response to determining from the message the client-facing interface status of one of the plurality of PE devices is an up state, configuring, by the CE device, Media Access Control (MAC) address learning on an interface of the CE device coupled to the one of the plurality of PE devices,
wherein the CE device is a bridge.

10. A provider edge (PE) device comprising:
one or more processors operably coupled to a memory,
a routing engine having at least one processor coupled to a memory, wherein the routing engine executes software configured to:
establish an Ethernet Virtual Private Network (EVPN) with one or more other PE devices;
determine a change in designated forwarder election from the PE device to another PE device, wherein the PE device and the another PE device are coupled to a multi-homed customer edge (CE) device by an Ethernet segment;
in response to the change in designated forwarder election, configure a message including at least a client-facing interface status of the PE device, wherein the client-facing interface status included in the message is configured as an indicator of a result of the change in designator forwarder election; and
transmit the message to the multi-homed CE device.

11. The PE device of claim 10,
wherein the change in designated forwarder election includes a change of the PE device from a designated forwarder for forwarding packets from the EVPN to the CE device to a non-designated forwarder, and
wherein the client-facing interface status of the PE device includes a down state as an indicator that the PE device has changed from the designated forwarder to the non-designated forwarder.

12. The method of any of claims 10-11,
wherein the change in designated forwarder election includes a change of the PE device from a non-designated forwarder to a designated forwarder for forwarding packets from the EVPN to the CE device, and
wherein the client-facing interface status of the PE device includes an up state as an indicator that the PE device has changed from the non-designated forwarder to the designated forwarder.

13. The PE device of any of claims 10-12, wherein the routing engine further comprises:
a Maintenance Association End Point (MEP) configured for execution by the one or more processors to:
implement a Continuity Check Protocol (CCP);
configure the message as a Connectivity Fault Management (CFM) message including at least an Interface Status Type, Length, Value (TLV) indicating the client-facing interface status of the PE device.

14. The PE device of claim 13, wherein the TLV indicating the client-facing interface status of the PE device comprises a down state as an indicator of the result that the PE device is changed from a designated forwarder to a non-designated forwarder.

15. The PE device of claim 13, wherein the TLV indicating the client-facing interface status of the PE device comprises an up state as an indicator of the result that that the PE device is changed from a non-designated forwarder to a designated forwarder.
